# EUROPEAN PATENT APPLICATION

(11) **EP 1 858 256 A2**
(43) Date of publication of application: **21.11.2007**
(21) Application number: 07009725.8
(22) Date of filing: 15.05.2007
(51) Int. Cl.: H04N 5/44

(54) **Video display device**

(30) Priority: 19.05.2006 JP 2006140065
(71) Applicant: Funai Electric Co., Ltd., Daito-shi, Osaka 574-0031 (JP)
(72) Inventor: Mizuno, Daisuke, Daito-shi, Osaka 574-0013 (JP)
(74) Representative: Grünecker, Kinkeldey, Stockmair & Schwanhäusser Anwaltssozietät

(57) **Abstract**

A video display device includes: an enlargement/reduction unit for enlarging or reducing the video signal in response to enlargement/reduction display formats, and for generating video signals corresponding to the enlargement/reduction display formats; a screen division unit for dividing a display area of the display unit into divided display areas, and for displaying images which are based on the video signals generated by the enlargement/reduction unit, on the divided display areas; a selection unit for selecting a desired image from among the images which are based on the video signals corresponding to the enlargement/reduction display formats and are displayed on the display unit by the screen division unit; and a display control unit for allowing the display unit to display an image which is based on the video signal generated by the enlargement/reduction unit, in response to the enlargement/reduction display format corresponding to the image selected by the selection unit.

## Description

### BACKGROUND OF THE INVENTION

### Field of the Invention

The present invention relates to a video display device.

### Description of the Related Art

Conventionally, as aspect ratios of a video signal, there have been known 4:3 which is used for a video signal according to the national television system committee (NTSC) mode and is frequently used for an image on a monitor of a personal computer and an image taken by a digital camera, 16:9 which is used for a hi-vision television or the like, and the like. Then, in the case of displaying the video signal having the aspect ratio of 4:3 in the NTSC mode or the like on the hi-vision television having the aspect ratio of 16: 9, it is necessary to display the video signal by performing an enlargement processing for the video signal. Accordingly, a plurality of types of enlargement/reduction display formats have been provided in the hi-vision television, and a user has allowed the hi-vision television to sequentially display images according to the enlargement/reduction display formats sequentially selected by a remote controller and the like, and has decided which enlargement/reduction display format is used in order to watch television.

Moreover, there has been also known a technique in which the size of an image of the video signal having the aspect ratio of 4:3 and that of the video signal having the aspect ratio of 16: 9 are appropriately enlarged or reduced, and these two images are displayed on a screen (for example, refer to JP-Tokukai-H07-184138A as Patent Document 1).

However, because there are only some slight differences among the images enlarged according to the respective enlargement/reduction formats, there is a problem that it is difficult to sequentially display the images according to the enlargement/reduction display formats sequentially selected by the user and to compare the respective images with one another. The invention described in Patent Document 1 is one in which the image sizes are enlarged or reduced for the purpose of arranging and displaying images on one screen, which are based on the video signals having the different aspect ratios. Therefore, the above-described problem cannot be solved.

### SUMMARY OF THE INVENTION

It is an object of the present invention to provide a video display device capable of selecting the enlargement/reduction display formats more easily.

In accordance with a first aspect of the invention, a video display device comprises:
a display unit for displaying an image that is based on a video signal;
an aspect ratio determination unit for determining an aspect ratio of the video signal;
an enlargement/reduction unit for enlarging or reducing the video signal in response to a plurality of enlargement/reduction display formats based on the aspect ratio determined by the aspect ratio determination unit, and for generating a plurality of video signals corresponding to the plurality of enlargement/reduction display formats;
a screen division unit for dividing a display area of the display unit into a plurality of divided display areas, and for displaying a plurality of images which are based on the plurality of video signals generated by the enlargement/reduction unit, on the plurality of divided display areas;
a selection unit for selecting a desired image from among the images which are based on the plurality of video signals corresponding to the plurality of enlargement/reduction display formats and are displayed on the display unit by the screen division unit; and
a display control unit for allowing the display unit to display an image which is based on the video signal generated by the enlargement/reduction unit, in response to the enlargement/reduction display format corresponding to the image selected by the selection unit.

According to the first aspect of the invention, by the enlargement/reduction unit, the video signal is enlarged or reduced in response to the plurality of enlargement/reduction display formats, and the plurality of video signals corresponding to the plurality of enlargement/reduction display formats are generated. Moreover, by the screen division unit, the display area of the display unit is divided into the plurality of divided display areas, and the plurality of images which are based on the plurality of video signals generated by the enlargement/reduction unit are displayed on the plurality of divided display areas. Furthermore, by the selection unit, the desired image is selected from among the images which are based on the plurality of video signals corresponding to the plurality of enlargement/reduction display formats and are displayed on the display unit by the screen division unit. Moreover, by the display control unit, the image that is based on the video signal generated by the enlargement/reduction unit is displayed on the display unit in response to the enlargement/reduction display format corresponding to the image selected by the selection unit. Accordingly, the images enlarged or reduced according to the plurality of enlargement/reduction display formats are displayed in a divided manner on one screen. Therefore, the images according to the plurality of enlargement/reduction display formats which are displayed in the divided manner, can be visually compared with one another at the same time. It is possible to select the enlargement/reduction display format more easily.

Moreover, the aspect ratio of the video signal is determined by the aspect ratio determination unit, and by the enlargement/reduction unit, the video signal is enlarged or reduced in response to the plurality of enlargement/reduction display formats based on the aspect ratio determined by the aspect ratio determination unit, and the plurality of video signals corresponding to the plurality of enlargement/reduction display formats are generated. Accordingly, the images enlarged or reduced according to the enlargement/reduction display formats corresponding to the aspect ratio of the video signal are automatically displayed in the divided manner on one screen even if the user does not know the aspect ratio of the video signal. Therefore, it is possible to select the enlargement/reduction display format far more easily.

In accordance with a second aspect of the invention, a video display device comprises:
a display unit for displaying an image that is based on a video signal;
an enlargement/reduction unit for enlarging or reducing the video signal in response to a plurality of enlargement/reduction display formats, and for generating a plurality of video signals corresponding to the plurality of enlargement/reduction display formats;
a screen division unit for dividing a display area of the display unit into a plurality of divided display areas, and for displaying a plurality of images which are based on the plurality of video signals generated by the enlargement/reduction unit, on the plurality of divided display areas;
a selection unit for selecting a desired image from among the images which are based on the plurality of video signals corresponding to the plurality of enlargement/reduction display formats and are displayed on the display unit by the screen division unit; and
a display control unit for allowing the display unit to display an image which is based on the video signal generated by the enlargement/reduction unit, in response to the enlargement/reduction display format corresponding to the image selected by the selection unit.

According to the second aspect of the invention, by the enlargement/reduction unit, the video signal is enlarged or reduced in response to the plurality of enlargement/reduction display formats, and the plurality of video signals corresponding to the plurality of enlargement/reduction display formats are generated. Moreover, by the screen division unit, the display area of the display unit is divided into the plurality of divided display areas, and the plurality of images which are based on the plurality of video signals generated by the enlargement/reduction unit are displayed on the plurality of divided display areas. Furthermore, by the selection unit, the desired image is selected from among the images which are based on the plurality of video signals corresponding to the plurality of enlargement/reduction display formats and are displayed on the display unit by the screen division unit. Moreover, by the display control unit, the image that is based on the video signal generated by the enlargement/reduction unit is displayed on the display unit in response to the enlargement/reduction display format corresponding to the image selected by the selection unit. Accordingly, the images enlarged or reduced according to the plurality of enlargement/reduction display formats are displayed in a divided manner on one screen. Therefore, the images according to the plurality of enlargement/reduction display formats which are displayed in the divided manner, can be visually compared with one another at the same time. It is possible to select the enlargement/reduction display format more easily.

In accordance with a third aspect of the invention, a video display device comprises:
a display unit for displaying an image that is based on a video signal;
a storing unit for storing a plurality of reference image data enlarged or reduced in response to a plurality of enlargement/reduction display formats;
a screen division unit for dividing a display area of the display unit into a plurality of divided display areas, and displays reference images which are based on the plurality of reference image data stored by the storing unit, on the plurality of divided display areas;
a selection unit for selecting a desired reference image from among the plurality of reference images which correspond to the plurality of enlargement/reduction display formats and are displayed on the display unit by the screen division unit;
an enlargement/reduction unit for enlarging or reducing the video signal in response to the enlargement/reduction display format corresponding to the reference image selected by the selection unit; and
a display control unit for allowing the display unit to display an image that is based on the video signal enlarged or reduced by the enlargement/reduction unit.

According to the third aspect of the invention, the plurality of reference image data enlarged or reduced in response to the plurality of enlargement/reduction display formats are stored by the storing unit. Moreover, by the screen division unit, the display area of the display unit is divided into the plurality of divided display areas, and the reference images which are based on the plurality of reference image data stored by the storing unit are displayed on the plurality of divided display areas. Furthermore, by the selection unit, the desired reference image is selected from among the plurality of reference images which correspond to the plurality of enlargement/reduction display formats and are displayed on the display unit by the screen division unit. Moreover, by the enlargement/reduction unit, the video signal is enlarged or reduced in response to the enlargement/reduction display format corresponding to the reference image selected by the selection unit. Furthermore, by the display control unit, the image that is based on the video signal enlarged or reduced by the enlargement/reduction unit is displayed on the display unit. Accordingly, the reference images enlarged or reduced according to the plurality of enlargement/reduction display formats are displayed in the divided manner on one screen. Therefore, the reference images according to the plurality of enlargement/reduction display formats, which are displayed in the divided manner, can be visually compared with one another at the same time. It is possible to select the enlargement/reduction display format more easily.

Moreover, the plurality of reference image data enlarged or reduced in response to the plurality of enlargement/reduction display formats are stored in advance in the storing unit, and accordingly, the plurality of reference images can be displayed rapidly in the divided manner on one screen. It is possible to select the enlargement/reduction display format more efficiently.

### BRIEF DESCRIPTION OF THE DRAWINGS

The present invention will become fully understood from the detailed description given hereinafter and the accompanying drawings given by way of illustration only, and thus are not intended as a definition of the limits of the present invention, wherein:
FIG. 1 is a view showing a schematic configuration of a digital television according to a first embodiment of the present invention;
FIG. 2 is a block diagram showing a configuration of the digital television according to the first embodiment of the present invention;
FIG. 3 is a view explaining an example of images displayed on a display unit according to the present invention;
FIG. 4 is a flowchart explaining an example of an enlargement/reduction operation and a display control operation for a video signal in a digital broadcast recording device according to the first embodiment of the present invention;
FIG. 5 is a view showing a schematic configuration of a digital television according to a second embodiment of the present invention;
FIG. 6 is a block diagram showing a configuration of the digital television according to the second embodiment of the present invention; and
FIG. 7 is a flowchart explaining an example of an enlargement/reduction operation and a display control operation for the video signal in a digital broadcast recording device according to the second embodiment of the present invention.

### PREFERRED EMBODIMENT OF THE PRESENT INVENTION

Hereinafter, embodiments of a video display device according to the present invention will be explained with reference to the drawings. Although a digital television is explained in the embodiments as an example of the video display device, the scope of the present invention is not limited to the embodiments.

### (First Embodiment)

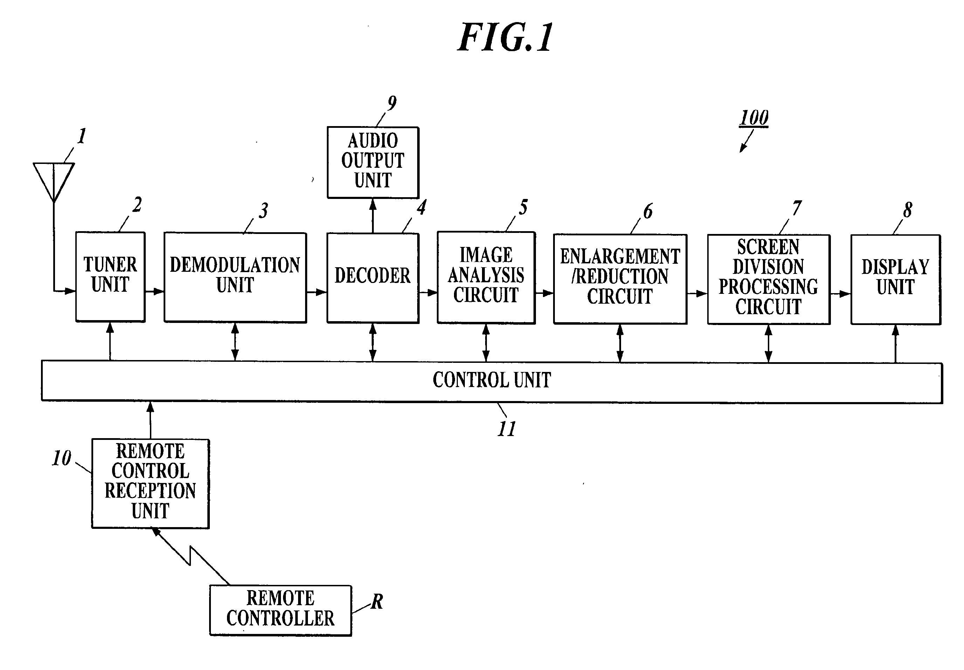

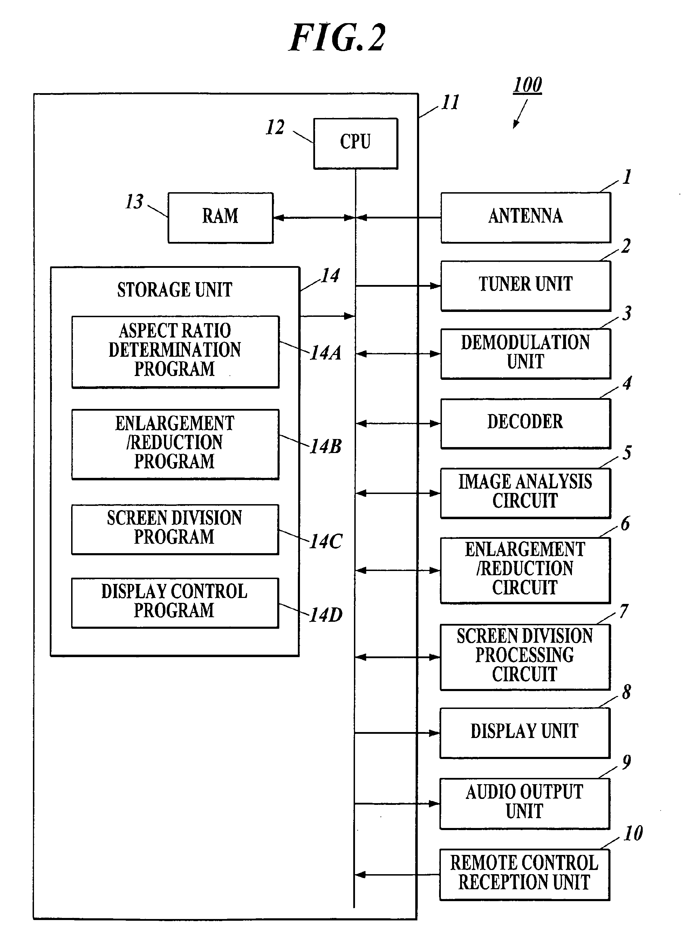

First, a configuration of a digital television 100 according to a first embodiment of the present invention is explained with reference to FIG. 1 and FIG. 2. For example, as shown in FIG. 1 and FIG. 2, the digital television 100 according to this embodiment comprises an antenna 1, a tuner unit 2, a demodulation unit 3, a decoder 4, an image analysis circuit 5, an enlargement/reduction circuit 6, a screen division processing circuit 7, a display unit 8, an audio output unit 9, a remote control reception unit 10, a remote controller R, a control unit 11, and the like.

For example, the antenna 1 is a parabola antenna, a UHF antenna, or the like. The antenna 1 receives a broadcast wave including television broadcast signals of ground digital broadcasting, BS/CS broadcasting, or the like, and outputs RF signals of ground digital broadcasting, BS/CS broadcast signals or the like to the tuner unit 2. In the case of receiving the broadcast wave through a CATV network, a connection cable (not shown) and the like may be provided.

The tuner unit 2 comprises a mixer (not shown), a tuning circuit (not shown), an A/D conversion circuit (not shown), and the like. By the mixer, the tuning circuit, and the like, the RF signal inputted from the antenna 1 is converted into intermediate frequency (IF) signal of the channel desired by a user, and by the A/D conversion circuit, the generated IF signal is converted into digital data.

For example, the demodulation unit 3 performs demodulation processing and the like for the digital data inputted from the tuner unit 2, and outputs the demodulated digital data to the decoder 4.

For example, the decoder 4 performs decoding processing and the like for the digital data inputted from the demodulation unit 3, generates a video signal and audio signals, outputs the video signal to the image analysis circuit 5 and the control unit 11, and outputs the audio signals to the audio output unit 9.

The image analysis circuit 5 is controlled by executing an aspect ratio determination program 14A (described later) using a CPU 12 (described later). The image analysis circuit 5 analyzes the video signal outputted from the decoder 4, and outputs a signal regarding an aspect ratio of the video signal to the CPU 12. The image analysis circuit 5 functions as a part of an aspect ratio determination unit.

For example, the enlargement/reduction circuit 6 is controlled by executing an enlargement/reduction program 14B (described later) using the CPU 12. The enlargement/reduction circuit 6 performs an enlargement/reduction processing for the video signal outputted from the decoder 4 through the CPU 12 based on predetermined enlargement/reduction display formats. The enlargement/reduction circuit 6 functions as a part of an enlargement/reduction unit.

For example, the screen division processing circuit 7 is controlled by executing a screen division program 14C (described later) using the CPU 12. The screen division processing circuit 7 divides a display area of the display unit 8 into a plurality of divided display areas, and synthesizes a plurality of video signals outputted from the enlargement/reduction circuit 6 through the CPU 12 so that a plurality of images which are based on the plurality of video signals can be displayed on the plurality of divided display areas. The screen division processing circuit 7 functions as a part of a screen division unit.

For example, the display unit 8 comprises a liquid crystal display (LCD), a plasma display panel (PDP), or the like, and displays videos which are based on the video signals outputted from the CPU 12.

For example, the audio output unit 9 comprises a speaker and the like, and outputs sounds which are based on the audio signals outputted from the decoder 4.

For example, the remote control reception unit 10 outputs operation signals outputted from the remote controller R, to the control unit 11. More specifically, the remote control reception unit 10 converts infrared signals from the remote controller R into electrical signals, and outputs the electrical signals to the control unit 11.

For example, the remote controller R includes a variety of keys and the like for inputting the variety of operation signals. When the remote controller R is operated by the user, the remote controller R outputs the variety of operation signals to the remote control reception unit 10.

More specifically, the remote controller R outputs a selection signal for selecting an image desired by the user to the control unit 11 from among images which are based on the plurality of video signals corresponding to a plurality of the enlargement/reduction display formats and which are displayed on the display unit 8. The remote controller R functions as a selection unit.

For example, as shown in FIG. 2, the control unit 11 comprises a central processing unit (CPU) 12, a random access memory (RAM) 13, a storage unit 14, and the like.

For example, the CPU 12 reads out the processing programs and the like, which are stored in the storage unit 14, expands the processing programs in the RAM 13 and executes the processing programs. Thereby, the entirety of the digital television 100 is controlled.

The RAM 13 expands the processing programs and the like, which are executed by the CPU 12, in program storage areas in the RAM 13, and stores processing results and the like, which are generated when input data and the above-described processing programs are executed, in a data storage area.

For example, the storage unit 14 has a recording medium (not shown) in which the programs, the data, and the like are stored in advance. For example, the recording medium comprises a semiconductor memory and the like. Moreover, the storage unit 14 stores a plurality of kinds of data and processing programs for allowing the CPU 12 to realize a function to control the entirety of the digital television 100, data processed by executing the programs, and the like. More specifically, for example, as shown in FIG. 2, the storage unit 14 stores the aspect ratio determination program 14A, the enlargement/reduction program 14B, the screen division program 14C, the display control program 14D, and the like.

For example, the aspect ratio determination program 14A is a program for allowing the CPU 12 to realize a function to control the image analysis circuit 5, to analyze the video signal outputted from the decoder 4, and to determine the aspect ratio of the video signal. By executing the aspect ratio determination program 14A, the CPU 12 and the image analysis circuit 5 function as the aspect ratio determination unit.

For example, the enlargement/reduction program 14B is a program for allowing the CPU 12 to realize a function to control the enlargement/reduction circuit 6, to perform the enlargement/reduction processing for the video signal outputted from the decoder 4 in response to the predetermined enlargement/reduction display formats, and to generate the video signals corresponding to the enlargement/reduction display formats. More specifically, for example, the enlargement/reduction program 14B includes the plurality of enlargement/reduction display formats for each of the aspect ratios. Moreover, the enlargement/reduction program 14B is a program for allowing the CPU 12 to realize a function to cause the enlargement/reduction circuit 6 to perform the enlargement/reduction processing for the video signal in response to the plurality of enlargement/reduction display formats which are based on the aspect ratio determined by executing the aspect ratio determination program 14A, and to generate the plurality of video signals corresponding to the plurality of enlargement/reduction display formats. By executing the enlargement/reduction program 14B, the CPU 12 and the enlargement/reduction circuit 6 function as the enlargement/reduction unit.

For example, the screen division program 14C is a program for allowing the CPU 12 to realize a function to control the screen division processing circuit 7, to divide the display area of the display unit 8 into the plurality of divided display areas, to synthesize the plurality of video signals so that the images which are based on the plurality of video signals generated by executing the enlargement/reduction program 14B can be displayed on the plurality of divided display areas, and to allow the display unit 8 to display the images which are based on the synthesized video signals. By executing the screen division program 14C, the CPU 12 and the screen division processing circuit 7 function as the image division unit.

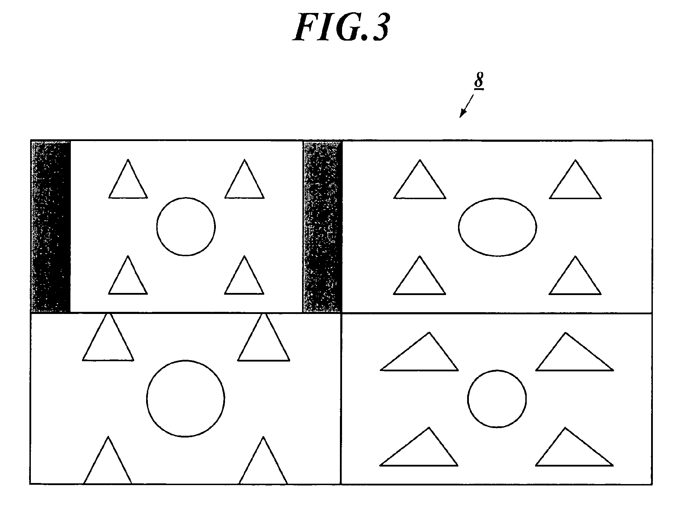

An example of the screen displayed on the display unit 8 by executing the screen division program 14C using the CPU 12 is shown in FIG. 3. For example, as shown in FIG. 3, the display area of the display unit 8 is divided into four divided display areas, and on the divided display areas, four images for which the enlargement/reduction processing is performed in response to four enlargement/reduction display formats in the case of displaying images which are based on the video signal having an aspect ratio of 4:3 on a screen having an aspect ratio of 16: 9 are individually displayed. For example, as shown in FIG. 3, on the upper left divided display area of the screen, an image according to a display format that does not perform the enlargement/reduction processing is displayed. On the upper right divided display area, an image according to an enlargement/reduction display format that enlarges the image only in the lateral direction is displayed. On the lower left divided display area, an image according to an enlargement/reduction display format that enlarges the image without changing the aspect ratio thereof and cuts a portion lying offscreen is displayed. On the lower right divided display area, an image according to an enlargement/reduction display format that enlarges the image while increasing an amplification thereof in the lateral direction from the center to the ends is displayed.

For example, the display control program 14D is a program for allowing the CPU 12 to realize a function to allow the display unit 8 to entirely display an image that is based on a video signal generated by executing the enlargement/reduction program 14B in response to the enlargement/reduction display format corresponding to the selected image when the desired image is selected from among the images which are based on the plurality of video signals corresponding to the plurality of enlargement/reduction display formats and are displayed on the display unit 8, by operating the remote controller R by the user. By executing the display control program 14D, the CPU 12 functions as a display control unit.

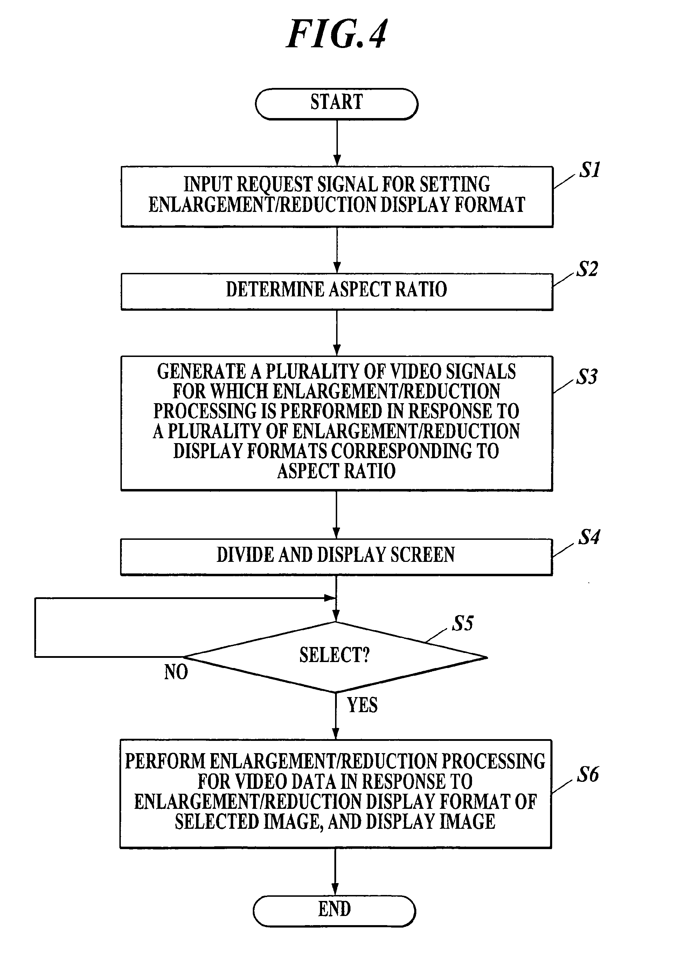

Next, an enlargement/reduction operation and a display control operation for the video signals of the digital television 100 which is configured as described above according to the first embodiment will be explained with reference to a flowchart shown in FIG. 4.

First, when a request signal for setting the enlargement/reduction display format is inputted by operating the remote controller R by a user (Step S1), the CPU 12 controls the image analysis circuit 5 to determine the aspect ratio of the video signal by executing the aspect ratio determination program 14A (Step S2).

Next, by executing the enlargement/reduction program 14B, the CPU 12 allows the enlargement/reduction circuit 6 to perform the enlargement/reduction processing for the video signal in response to the plurality of enlargement/reduction display formats which are based on the aspect ratio determined by executing the aspect ratio determination program 14A, and generates the plurality of video signals corresponding to the plurality of enlargement/reduction display formats (Step S3).

Next, by executing the screen division program 14C, the CPU 12 controls the screen division processing circuit 7 to divide the display area of the display unit 8 into the plurality of divided display areas. Then, the CPU 12 synthesizes the plurality of video signals so that the images which are based on the plurality of video signals generated by executing the enlargement/reduction program 14B can be displayed on the plurality of divided display areas, and allows the display unit 8 to display the images which are based on the synthesized video signals (Step S4).

Next, the CPU 12 determines whether or not any image of the images which are based on the plurality of video signals corresponding to the plurality of enlargement/reduction display formats and are displayed on the display unit 8, is selected by operating the remote controller R (Step S5) by the user.

In Step S5, when the CPU 12 determines that no image of the images which are based on the plurality of video signals corresponding to the plurality of enlargement/reduction display formats and are displayed on the display unit 8, is selected (Step S5: No), the CPU 12 repeats the processing of Step S5.

In Step S5, when the CPU 12 determines that any image of the images which are based on the plurality of video signals corresponding to the plurality of enlargement/reduction display formats and are displayed on the display unit 8, is selected (Step S5: Yes), by executing the display control program 14D, the CPU 12 allows the display unit 8 to entirely display the image that is based on the video signal generated by executing the enlargement/reduction program 14B in response to the enlargement/reduction display format corresponding to the selected image (Step S6).

In accordance with the digital television 100 according to the first embodiment of the present invention, which is described above, by executing the enlargement/reduction program 14B using the CPU 12, the video signals are enlarged and reduced in response to the plurality of enlargement/reduction display formats, and the plurality of video signals corresponding to the plurality of enlargement/reduction display formats are generated. Moreover, by executing the screen division program 14C using the CPU 12, the display area of the display unit 8 is divided into the plurality of divided display areas, and the plurality of images which are based on the plurality of video signals generated by executing the enlargement/reduction program 14B, are displayed on the plurality of divided display areas. Further, the desired image among the images which are based on the plurality of video signals corresponding to the plurality of enlargement/reduction display formats and are displayed on the display unit 8, is selected by operating the remote controller R by the user. Furthermore, by executing the display control program 14D using the CPU 12, the image that is based on the video signal for which the enlargement/reduction processing is performed in response to the enlargement/reduction display format corresponding to the selected image is displayed (entirely displayed) on the display unit 8. Accordingly, the images enlarged or reduced according to the plurality of enlargement/reduction display formats are displayed in a divided manner on one screen. Therefore, the images according to the plurality of enlargement/reduction display formats, which are displayed in the divided manner, can be visually compared with one another at the same time, and it is possible to select the enlargement/reduction display format more easily.

Moreover, by executing the aspect ratio determination program 14A using the CPU 12, the aspect ratio of the video signal is determined. Furthermore, by executing the enlargement/reduction program 14B using the CPU 12, the video signals are enlarged or reduced in response to the plurality of enlargement/reduction display formats on the basis of the determined aspect ratio, and the plurality of video signals corresponding to the plurality of enlargement/reduction display formats are generated. Accordingly, the images enlarged or reduced according to the enlargement/reduction display formats corresponding to the aspect ratio of the video signal are automatically displayed in the divided manner on one screen even if the user does not know the aspect ratio of the video signal. Therefore, it is possible to select the enlargement/reduction display format more easily.

### (Second Embodiment)

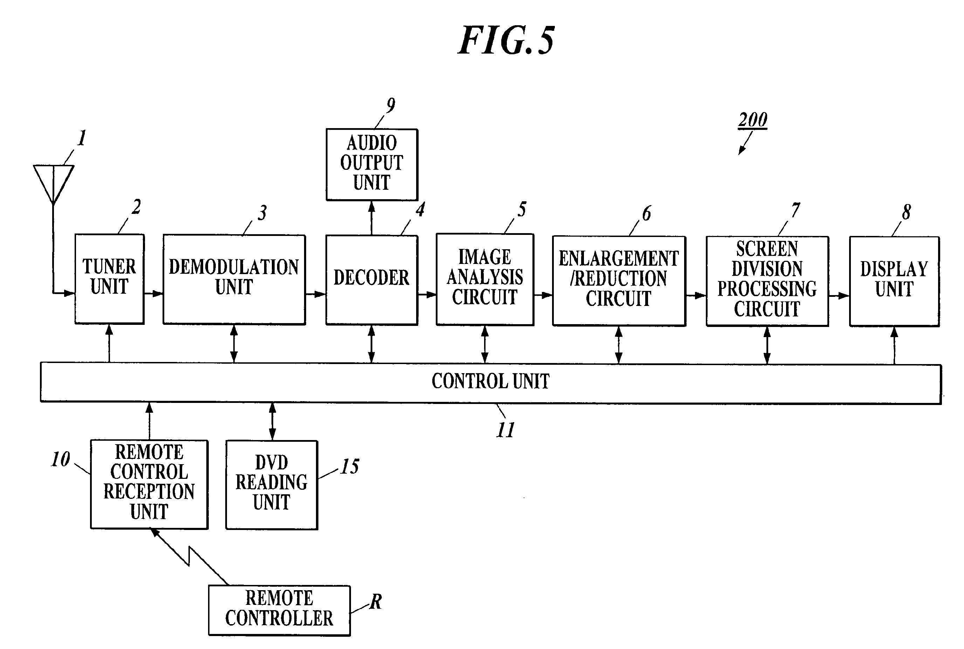

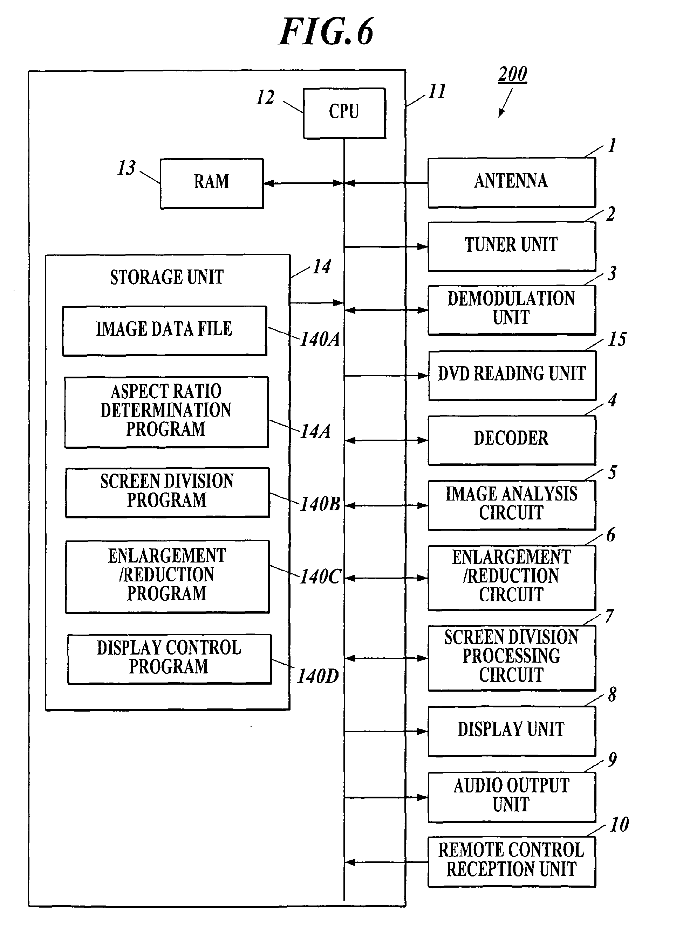

For example, as shown in FIG. 5 and FIG. 6, a digital television 200 according to a second embodiment is different from the digital television 100 according to the first embodiment only in the components of a DVD reading unit 15 and a storage unit 140. Accordingly, the same reference numerals are assigned to the same components, and the description thereof will be omitted.

For example, the DVD reading unit 15 comprises a pickup (not shown), an RF amplifier (not shown), and the like. The DVD reading unit 15 reads out audio and video information recorded in a DVD, and outputs the read audio and video information to the decoder 4.

For example, the storage unit 140 has a recording medium (not shown) in which programs, data, and the like are stored in advance. For example, the recording medium comprises a semiconductor memory and the like. Moreover, the storage unit 140 stores a plurality of kinds of data and processing programs for allowing the CPU 12 to realize a function to control the entirety of the digital television 200, data processed by executing the programs, and the like. More specifically, for example, as shown in FIG. 6, the storage unit 140 stores an image data file 140A, the aspect ratio determination program 14A, a screen division program 140B, an enlargement/reduction program 140C, a display control program 140D, and the like.

For example, the image data file 140A stores a plurality of reference image data enlarged or reduced in response to the plurality of enlargement/reduction display formats. The plurality of reference image data enlarged or reduced in response to the enlargement/reduction display formats are provided for each of the aspect ratios.

Specifically, for example, the reference image data are data in which one original image data is enlarged or reduced in response to the plurality of enlargement/reduction display formats, and the reference image data may be either still images or moving images. By storing the image data file 140A, the storage unit 140 functions as a storing unit.

For example, the screen division program 140B is a program for allowing the CPU 12 to realize a function to control the screen division processing circuit 7, to divide the display area of the display unit 8 into the plurality of divided areas, to synthesize the plurality of reference image data so that the reference images which are based on the plurality of reference image data corresponding to the aspect ratio determined by executing the aspect ratio determination program 14A can be displayed on the plurality of divided display areas, and to allow the display unit 8 to display the reference images which are based on the synthesized reference image data. By executing the screen division program 140B, the CPU 12 and the screen division processing circuit 7 function as the image division unit.

For example, the enlargement/reduction program 140C is a program for allowing the CPU 12 to realize the following the function. When a desired reference image is selected from among the reference images which are based on the plurality of video signals corresponding to the plurality of enlargement/reduction display formats and are displayed on the display unit 8, by operating the remote controller R by the user, the enlargement/reduction circuit 6 is controlled, the enlargement/reduction processing for the video signal outputted from the decoder 4 is performed in response to an enlargement/reduction display format corresponding to the selected reference image, and a video signal corresponding to the enlargement/reduction display format is generated. By executing the enlargement/reduction program 140C, the CPU 12 and the enlargement/reduction circuit 6 function as the enlargement/reduction unit together with.

For example, the display control program 140D is a program for allowing the CPU 12 to realize a function to allow the display unit 8 to entirely display an image that is based on the video signal generated by executing the enlargement/reduction program 140C. By executing the display control program 140D, the CPU 12 functions as the display control unit.

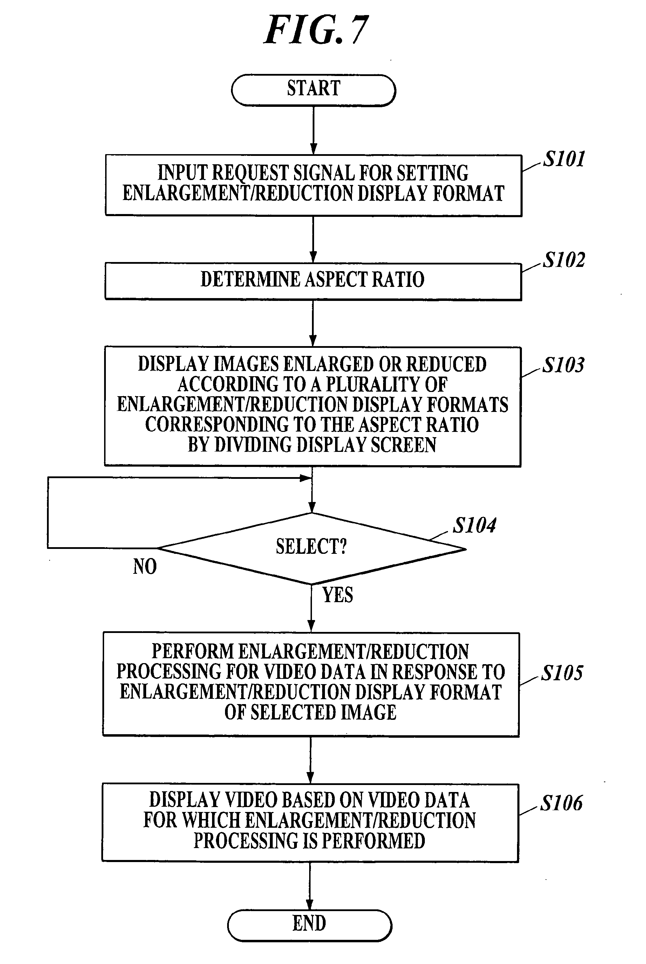

Next, an enlargement/reduction operation and a display control operation for the video signals read out from the DVD of the digital television 200 according to the second embodiment, which is configured as described above, will be explained with reference to a flowchart shown in FIG. 7.

First, when the request signal for setting the enlargement/reduction display format is inputted by operating the remote controller R by the user (Step S101), by executing the aspect ratio determination program 14A, the CPU 12 controls the image analysis circuit 5 to determine the aspect ratio of the video signal (Step S102).

Next, by executing the screen division program 140B, the CPU 12 controls the screen division processing circuit 7 to divide the display area of the display unit 8 into the plurality of divided display areas. Then, the CPU 12 synthesizes the plurality of video signals so that the reference images which are based on the plurality of reference image data corresponding to the aspect ratio determined in Step S102, among the plurality of reference image data stored in the image data file 140A can be displayed on the plurality of divided display areas. Then, the CPU 120 allows the display unit 8 to display the images which are based on the synthesized video signals (Step S103).

Next, the CPU 12 determines whether or not any reference image of the plurality of reference images which correspond to the plurality of enlargement/reduction display formats and are displayed on the display unit 8, is selected by operating the remote controller R by the user (Step S104).

In Step S104, when the CPU 12 determines that no reference image of the reference images which correspond to the plurality of enlargement/reduction display formats and are displayed on the display unit 8, is selected (Step S104: No), the CPU 12 repeats the processing of Step S104.

In Step S104, when the CPU 12 determines that any reference image of the plurality of reference images which correspond to the plurality of enlargement/reduction display formats and are displayed on the display unit 8, is selected (Step S104: Yes), by executing the enlargement/reduction display program 140C, the CPU 12 performs the enlargement/reduction processing for the video signal which is read out from the DVD by the DVD reading unit 15 and is outputted from the decoder 4, in response to the enlargement/reduction display format corresponding to the selected reference image (Step S105).

Next, by executing the display control program 140D, the CPU 12 allows the display unit 8 to entirely display the video that is based on the video signal for which the enlargement/reduction processing is performed in Step S105 (Step S106).

In accordance with the digital television 200 according to the second embodiment of the present invention, which is described above, the plurality of reference image data enlarged or reduced in response to the plurality of enlargement/reduction display formats are stored in the image data file 140A of the storage unit 140. Moreover, by executing the screen division program 140B using the CPU 12, the display area of the display unit 8 is divided into the plurality of divided display areas, and the reference images based on the plurality of reference image data stored in the image data file 140A are displayed on the plurality of divided display areas. Further, the desired reference image among the plurality of reference images which correspond to the plurality of enlargement/reduction display formats and are displayed on the display unit 8 by executing the screen division program 140B using the CPU 12, is selected by operating the remote controller R by the user. Furthermore, by executing the enlargement/reduction program 140C using the CPU 12, the video signal is enlarged or reduced in response to the enlargement/reduction format corresponding to the selected reference image. Moreover, by executing the display control program 140D using the CPU 12, the image that is based on the enlarged or reduced video signal is displayed (entirely displayed) on the display unit 8. Accordingly, the reference images enlarged or reduced according to the plurality of enlargement/reduction display formats are displayed in a divided manner on one screen. Therefore, the reference images according to the plurality of enlargement/reduction display formats, which are displayed in the divided manner, can be visually compared with one another at the same time, and it is possible to select the enlargement/reduction display format more easily.

Moreover, the plurality of reference images enlarged or reduced in response to the plurality of enlargement/reduction display formats are stored in the image data file 140A, and accordingly, the plurality of reference images can be displayed rapidly in the divided manner on one screen. Therefore, it is possible to select the enlargement/reduction display format more efficiently.

Note that the digital television 100 according to the present invention may comprise a buffer that temporarily stores the moving images for which the enlargement/reduction processing is performed in response to the plurality of enlargement/reduction display formats by executing the enlargement/reduction program 14B using the CPU 12, and the like. In such a way, by executing the screen division program 14C using the CPU 12, the plurality of moving images which correspond to the plurality of enlargement/reduction display formats and are stored in the buffer, are displayed on each of the divided display areas.

Moreover, although the digital television is explained as an example of the video display device of the present invention, the video display device may be anything as long as the device enlarges or reduces the video that is based on the video signal and then displays the enlarged or reduced video. For example, the display device may be a DVD player or the like.

The entire disclosure of Japanese Patent Application No. 2006-140065 filed on May 19, 2006 is incorporated herein by reference in its entirety.

## Claims

1. A video display device comprising:
a display unit for displaying an image that is based on a video signal;
an aspect ratio determination unit for determining an aspect ratio of the video signal;
an enlargement/reduction unit for enlarging or reducing the video signal in response to a plurality of enlargement/reduction display formats based on the aspect ratio determined by the aspect ratio determination unit, and for generating a plurality of video signals corresponding to the plurality of enlargement/reduction display formats;
a screen division unit for dividing a display area of the display unit into a plurality of divided display areas, and for displaying a plurality of images which are based on the plurality of video signals generated by the enlargement/reduction unit, on the plurality of divided display areas;
a selection unit for selecting a desired image from among the images which are based on the plurality of video signals corresponding to the plurality of enlargement/reduction display formats and are displayed on the display unit by the screen division unit; and
a display control unit for allowing the display unit to display an image which is based on the video signal generated by the enlargement/reduction unit, in response to the enlargement/reduction display format corresponding to the image selected by the selection unit.

2. A video display device comprising:
a display unit for displaying an image that is based on a video signal;
an enlargement/reduction unit for enlarging or reducing the video signal in response to a plurality of enlargement/reduction display formats, and for generating a plurality of video signals corresponding to the plurality of enlargement/reduction display formats;
a screen division unit for dividing a display area of the display unit into a plurality of divided display areas, and for displaying a plurality of images which are based on the plurality of video signals generated by the enlargement/reduction unit, on the plurality of divided display areas;
a selection unit for selecting a desired image from among the images which are based on the plurality of video signals corresponding to the plurality of enlargement/reduction display formats and are displayed on the display unit by the screen division unit; and
a display control unit for allowing the display unit to display an image which is based on the video signal generated by the enlargement/reduction unit, in response to the enlargement/reduction display format corresponding to the image selected by the selection unit.

3. A video display device comprising:
a display unit for displaying an image that is based on a video signal;
a storing unit for storing a plurality of reference image data enlarged or reduced in response to a plurality of enlargement/reduction display formats;
a screen division unit for dividing a display area of the display unit into a plurality of divided display areas, and displays reference images which are based on the plurality of reference image data stored by the storing unit, on the plurality of divided display areas;
a selection unit for selecting a desired reference image from among the plurality of reference images which correspond to the plurality of enlargement/reduction display formats and are displayed on the display unit by the screen division unit;
an enlargement/reduction unit for enlarging or reducing the video signal in response to the enlargement/reduction display format corresponding to the reference image selected by the selection unit; and
a display control unit for allowing the display unit to display an image that is based on the video signal enlarged or reduced by the enlargement/reduction unit.
